# EUROPÄISCHE PATENTSCHRIFT

(11) **EP 1 218 998 B1**
(45) Veröffentlichungstag und Bekanntmachung des Hinweises auf die Patenterteilung: **02.04.2003**
(21) Anmeldenummer: 00963905.5
(22) Anmeldetag: 16.08.2000
(51) Int. Cl.: H02H 3/33

(54) **FEHLERSTROM-SCHUTZEINRICHTUNG MIT FREQUENZGENERATOR**
RESIDUAL CURRENT PROTECTIVE DEVICE WITH FREQUENCY GENERATOR
DISPOSITIF DE PROTECTION CONTRE LES COURANTS DE FUITE POURVU D'UN GENERATEUR DE FREQUENCES

(30) Priorität: 13.09.1999 DE 19943780
(43) Veröffentlichungstag der Anmeldung: 03.07.2002
(73) Patentinhaber: SIEMENS AKTIENGESELLSCHAFT, 80333 München (DE)
(72) Erfinder: BAUER, Bernhard, 93053 Regensburg (DE)
(86) Internationale Anmeldenummer: DE0002767
(87) Internationale Veröffentlichungsnummer: WO01020740

(56) Entgegenhaltungen:
- DE-A- 3 714 002
- SOLLEDER R: "ALL FAULT CURRENTS UNDER CONTROL UC-SENSITIVE RESIDUAL-CURRENT PROTECTIVE DEVICES FOR INDUSTRIAL APPLICATIONS" DRIVE AND CONTROL,DE,SIEMENS AKTIENGESELLSCHAFT, BERLIN, Bd. 3, Nr. 4, 1. November 1993 (1993-11-01), Seiten 22-25, XP000439177 ISSN: 0939-8007 in der Anmeldung erwähnt

## Beschreibung

Die Erfindung betrifft eine Fehlerstrom-Schutzeinrichtung, insbesondere einen Differenzstromschutzschalter, mit einem Summenstromwandler, mit einer um den Summenstromwandler angeordneten Steuerwicklung, mit einer an dieser angeschlossenen Auswerteeinheit zur Erfassung eines Fehlerstroms, und mit einem mit der Steuerwicklung verbundenen Frequenzgenerator zur Erzeugung einer Wechselspannung.

Die Fehlerstrom-Schutzeinrichtung wird in elektrischen Anlagen zum Schutz des Menschen vor gefährlichen Körperströmen eingesetzt. Sie wird auch als Schutzschalter oder Schutzschalterzusatz bezeichnet, je nachdem, ob es sich um ein eigenständiges Gerät oder einen Zusatzbaustein für ein Schaltgerät handelt. Daneben erfüllen die Schutzschalter auch eine Brandschutzfunktion.

Bei den Schutzschaltern unterscheidet man den netzspannungsunabhängigen, sogenannten FI-Schalter (Fehierstrom-Schutzschalter), von dem netzspannungsabhängigen DI-Schutzschalter (Differenzstrom-Schutzschalter). Beide Schaltertypen weisen einen Summenstromwandler auf, durch den die Leiter eines Leiternetzes geführt sind. Der Summenstromwandler umfasst im Allgemeinen einen die Leiter umschließenden Eisenkern, um den eine Sekundärspule gewickelt ist. An die Sekundärspule ist eine Auswerteeinheit angeschlossen, welche mit einem Auslöser verbunden ist. Tritt im Leiternetz ein unzulässiger Fehlerstrom auf, so wird dieser vom Summenstromwandler mit der dazugehörigen Auswerteeinheit erfasst, und der Auslöser trennt über eine Schaltmechnanik die Leiter des Leiternetzes. Der Fehlerstrom, bei dem der Schutzschalter anspricht, wird als Auslösefehlerstrom bezeichnet.

Bei den Fehlerströmen wird unterschieden zwischen Wechselfehlerströmen, pulsierenden Gleichfehlerströmen und sogenannten glatten Gleichfehlerströmen. Bei Wechselfehlerströmen und pulsierenden Gleichfehlerströmen wird in der Sekundärwicklung aufgrund des sich mit dem Wechselfehlerstrom ändernden Magnetfeldes eine Spannung induziert, die durch die Auswerteeinheit ausgewertet werden kann. Eine Auswertung kann bei diesen Fehlerstromarten daher nach dem sogenannten Induktionsprinzip erfolgen.

Bei glatten Gleichfehlerströmen wird demgegenüber keine Spannung in der Sekundärwicklung induziert. Zur Erfassung von glatten Gleichfehlerströmen ist daher vorgesehen, die Sekundärspule als Steuerwicklung auszugestalten und einen Frequenzgenerator vorzusehen, der die Steuerwicklung mit einer Wechselspannung beaufschlagt. Durch den durch die Steuerwicklung fließenden Wechselstrom stellt sich in dem Summenstromwandler ein wechselmagnetisierter Zustand ein. Tritt ein Gleichfehlerstrom auf, so beeinflusst dieser den wechselmagnetisierten Zustand, was über die Auswerteeinheit erfasst werden kann. Dieses Prinzip ist beispielsweise bekannt aus dem Artikel "Alle Fehlerströme im Griff" aus DRIVE AND CON-TROL, Heft 4/93, Seiten 22-25, und wird dort als gesteuerte Induktivität bezeichnet.

Um einen problemlosen und insbesondere norm-konformen Einsatz des Schutzschalters zu gewährleisten, muss der Frequenzgenerator einigen Anforderungen genügen. Aus Kostengründen sollte der Sinusgenerator möglichst einfach auf die Arbeitsfrequenz, also die Frequenz mit der die Steuerwicklung beaufschlagt werden soll, abzugleichen sein bzw. es sollte überhaupt kein Abgleich notwendig sein. Generell ist zur Minimierung der Bauelementeverlustleistung im Netzteil eine niedrige Stromaufnahme wünschenswert. Der Frequenzgenerator sollte darüber hinaus eine Amplituden- und Frequenzstabilität über einen weiten Temperaturbereich aufweisen, damit der Schutzschalter über einen weiten Temperaturbereich innerhalb der Auslösefehlerstromgrenzen nach Vorschrift zuverlässig auslöst. Ein weiteres wesentliches Erfordernis ist, dass der Frequenzgenerator beim Einschalten eine sehr kurze Einschwingzeit aufweist, um zu verhindern, dass aufgrund des durch den Einschwingvorgang hervorgerufenen Signals der Schutzschalter ungewollt auslöst.

Als Frequenzgenerator sind aus dem Buch "Halbleiterschaltungstechnik" von Tietze, Schenk, 6. Aufl. auf S. 454 ff. ein Wien-Robinson-Oszillator sowie auf S. 323 ff. Sinusfunktionsnetzwerke bekannt. Bei dem Wien-Robinson-Oszillator wird ein Feldeffekttransistor verwendet, dessen Kennlinien insbesondere temperaturabhängig sind, wodurch dieser Oszillatortyp für den Einsatz in einem Schutzschalter ungeeignet ist. Sinusfunktionsnetzwerke sind sehr aufwendig und damit relativ teuer.

Der Erfindung liegt die Aufgabe zu Grunde, eine Fehlerstrom-Schutzeinrichtung mit einem Frequenzgenerator anzugeben, der für die speziellen Anforderungen der Schutzeinrichtung ausgelegt und möglichst einfach aufgebaut ist.

Die Aufgabe wird gemäß der Erfindung mit einer Fehlerstrom-Schutzeinrichtung nach dem Oberbegriff des Anspruches 1 gelöst, deren Frequenzgenerator als Sinusgenerator ausgestaltet ist, welcher einen Wechselspannungs-Rechteckgenerator und ein an den Rechteckgenerator angeschlossenes Durchlassfilter aufweist, welches auf die sinusförmige Grundschwingung der Rechteckwechselspannung abgestimmt ist.

Der Rechteckgenerator ist beispielsweise als Multivibrator ausgestaltet und als Durchlassfilter ist beispielsweise ein Tiefpassfilter vorgesehen. Die Rechteckwechselspannung lässt sich als Überlagerung einer Anzahl von Sinusschwingungen unterschiedlicher Ordnung beschreiben, deren Frequenzen ein Vielfaches der Grundschwingung (Schwingung nullter Ordnung) sind. Das Durchlassfilter ist derart abgestimmt, dass im Wesentlichen nur die Grundschwingung durchgelassen wird. Durch diese schaltungstechnisch sehr einfache Ausgestaltung wird eine für die Anwendungszwecke einer Schutzeinrichtung geeignete Sinusspannung erzeugt.

Insbesondere im Hinblick auf eine möglichst kurze Einschwingzeit ist das Durchlassfilter insbesondere als aktives Tiefpassfilter ausgestaltet. Es hat sich gezeigt, dass passive Filter ein für den Einsatz in Schutzschaltern sehr ungünstiges Einschwingverhalten aufweisen und bei dem Schutzschalter zu Fehlfunktionen führen würden.

Insbesondere hat sich herausgestellt, dass es bei dem Tiefpassfilter ausreichend ist, es als Filter zweiter Ordnung auszuführen. Ein aufwendig und teuer gestaltetes Filter, bei dem die Schwingungen höherer Ordnung stärker herausgefiltert werden, ist nicht notwendig.

Ein bevorzugter Wert für die Grenzfrequenz des Tiefpassfilters liegt zwischen der 0,2-fachen Frequenz und der einfachen Frequenz der Rechteck-Wechselspannung. Damit wird eine möglichst geringe Dämpfung der Grundwelle und gleichzeitig ein möglichst geringer Klirrfaktor erzielt. Der Klirrfaktor ist ein Maß für das Verhältnis der Oberschwingungen zur Grundschwingung. Ein geringer Klirrfaktor gibt also an, dass die Oberschwingungen im Vergleich zur Grundschwingung gut gedämpft sind. Bei der ausgewählten Grenzfrequenz wird zugleich die Grundschwingung nur in einem geringen Maße gedämpft, so dass die Dämpfung durch eine vorzugsweise an das Tiefpassfilter nachgeschaltete Verstärkereinheit problemlos ausgeglichen werden kann.

Weitere bevorzugte Ausführungsformen der Fehlerstrom-Schutzeinrichtung sind den Unteransprüchen zu entnehmen.

Eine Ausführungsform der Erfindung wird im Folgenden anhand der Zeichnung näher erläutert. Es zeigen:
- FIG 1: eine Fehlerstrom-Schutzeinrichtung in schematischer Darstellung und
- FIG 2: ein Blockschaltbild eines Sinusgenerators.

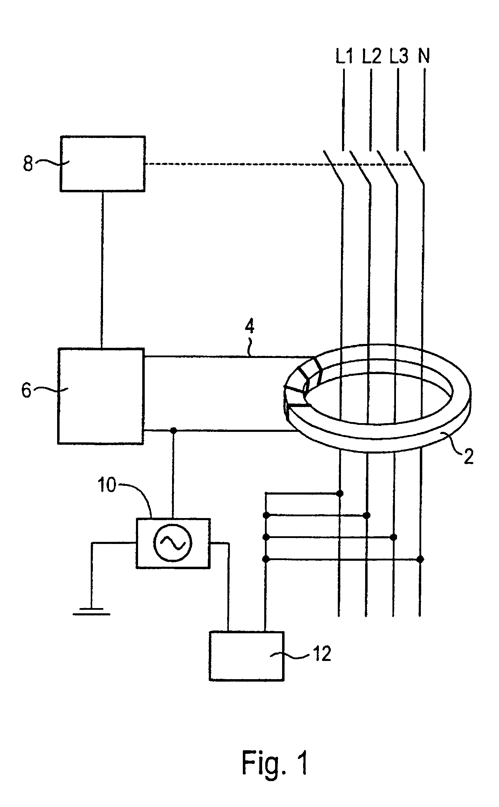

Gemäß FIG 1 werden die Leiter L1 bis L3 sowie der Nulleiter N eines Leiternetzes durch einen Summenstromwandler 2 geführt. Um den Summenstromwandler 2 ist eine als Spule ausgestaltete Steuerwicklung 4 gewickelt. An die Steuerwicklung 4 ist eine Auswerteinheit 6 angeschlossen, welche wiederum mit einem Auslöser 8 verbunden ist, der bevorzugt über eine mechanische Schaltvorrichtung die Leiter L1 bis L3 und den Nullleiter N im Bedarfsfall unterbricht. Die Steuerwicklung 4 wird mit einer Sinuswechselspannung von einem Frequenzgenerator 10 beaufschlagt. Der Frequenzgenerator 10 wird von einem Netzteil 12 mit Strom versorgt, wobei das Netzteil 12 den Strom aus dem Leiternetz entnimmt. Die dargestellte Ausführungsform mit einem Frequenzgenerator 10 ist also ein netzspannungsabhängiger DI-Schutzschalter. Dieser Schutzschalter beruht auf dem Prinzip der gesteuerten Induktivität, was bedeutet, dass durch die Beaufschlagung der Steuerwicklung 4 mit einem Wechselstrom der Summenstromwandler 2 wechselweise magnetisiert wird.

Im Normalfall ist die Summe der durch die Leiter L1 bis L3, N fließenden Ströme gleich Null. Tritt im Leiternetz ein Defekt auf, beispielsweise aufgrund einer mangelhaften Isolierung, so tritt ein Fehlerstrom auf. Ein glatter Gleichfehlerstrom führt zu einer bleibenden Vormagnetisierung des Summenstromwandlers 2. Die über die Steuerwicklung 4 aufgeprägte Wechselmagnetisierung verschiebt sich daher um die Vormagnetisierung, was von der Auswerteeinheit 6 erfasst wird. Sobald der Fehlerstrom einen vorzugsweise einstellbaren Schwellenwert, den sogenannten Auslösefehlerstrom überschreitet, steuert die Auswerteeinheit 6 den Auslöser 8 an, um die Leiter L1 bis L3, N zu trennen.

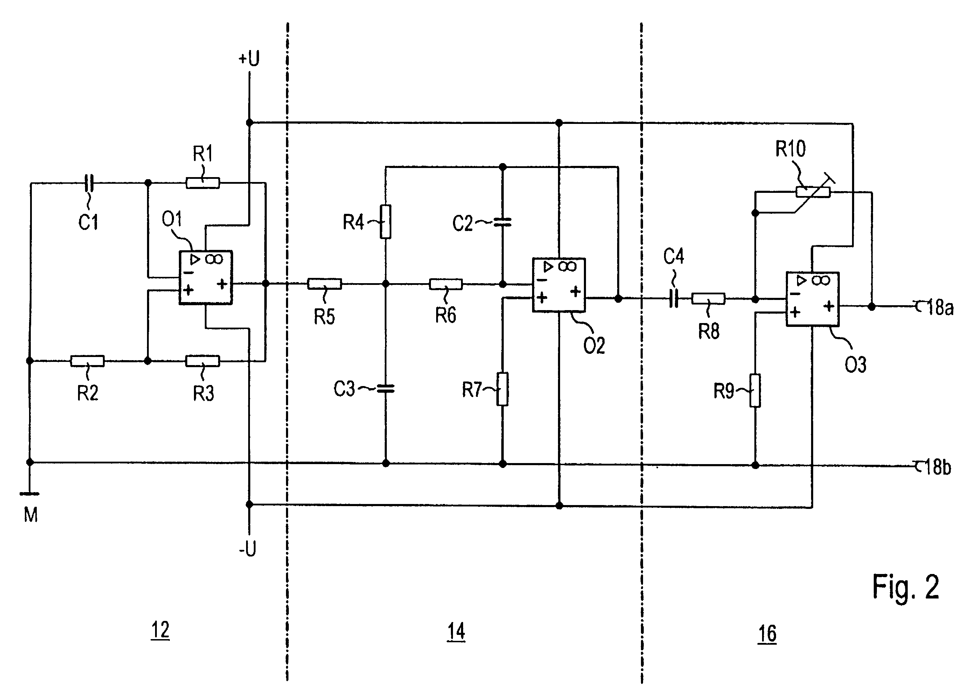

Die in FIG 2 dargestellte Schaltanordnung für einen Sinusgenerator läßt sich in drei Teilbereiche I,II,III einteilen (in der FIG 2 jeweils durch strichpunktierte Linien angedeutet). Der Teilbereich I ist als Rechteckgenerator 12 ausgestaltet, der auch als Multivibrator bezeichnet wird, und eine Rechteckwechselspannung mit einer Generatorfrequenz f_{gen} bereitstellt. Seine Schaltungsanordnung ist im Wesentlichen bekannt, beispielsweise aus "Halbleiterschaltungstechnik" von Tietze,Schenk, 6. Aufl., S. 179, woraus der funktionelle Aufbau der Schaltung entnehmbar ist.

Der Rechteckgenerator 12 weist einen Operationsverstärker O1, welcher vorzugsweise als Komparator ausgebildet ist und als aktives Bauteil an einer Spannungsquelle U angeschlossen ist. Der Rechteckgenerator 12 umfasst einen Kondensator C1 und einen Widerstand R1, welche im Wesentlichen die Zeitkonstante für die vom Rechteckgenerator 12 erzeugte Wechselspannung bestimmen. Weiterhin sind zwei Widerstände R2,R3 angeordnet, welche als Spannungsteiler für die vom Ausgang des Operationsverstärkers O1 an dessen Plus-Eingang angelegte Spannung dienen. Der Ausgang des Operationsverstärkers O1 ist über den Widerstand R1 mit seinem Minus-Eingang und über den Widerstand R3 mit seinem Plus-Eingang gekoppelt.

Der als Komparator ausgeführte Verstärker O1 hat gegenüber einem gewöhnlichen Operationsverstärker den Vorteil, dass seine Stromaufnahme in seinem gesamten Arbeitsbereich auf relativ niedrigem Niveau ist. Hingegen benötigt ein normaler Operationsverstärker, sobald er im Sättigungsbereich betrieben wird, einen erhöhten Versorgungsstrom. Im Hinblick auf die Anforderungen an einen Schutzschalter ist dies nachteilig, da eine hohe Stromaufnahme zu Verlustleistungsproblemen im Netzteil führt, insbesondere dann, wenn es sich um ein redundantes Netzteil handelt, welches aus allen Außenleitern und gegebenenfalls dem Nullleiter versorgt wird.

Am Ausgang des Rechteckgenerators 12 liegt eine Rechteckwechselspannung an, die an ein aktives Tiefpassfilter 14 übermittelt wird, welches im Teilbereich II dargestellt ist. Das aktive Tiefpassfilter 14 ist an sich aus dem bereits genannten Buch "Halbleiterschaltungstechnik" auf S. 405 bekannt. Das dargestellte Tiefpassfilter 14 ist als aktives Tiefpassfilter zweiter Ordnung mit Mehrfachgegenkopplung ausgestaltet. Es umfasst hierzu einen zweiten mit der Spannungsquelle U verbundenen Operationsverstärker 02, dessen Minus-Eingang über zwei Widerstände R5,R6 mit dem Ausgang des Rechteckgenerators 12 verbunden ist. Parallel zum Widerstand R6 sind der Widerstand R4 und der Kondensator C2 angeordnet, die zugleich mit dem Ausgang des Operationsverstärkers 02 verbunden sind. Der Widerstand R4 und der Kondensator C2 bilden also eine Rückkopplung für den Operationsverstärker 02. Der Plus-Eingang des Operationsverstärkers 02 ist über einen Widerstand R7 und der Minus-Eingang ist über den Widerstand R6 und einen Kondensator C3 mit Massepotential verbunden.

Das dargestellte Tiefpassfilter 14 zweiter Ordnung bewirkt eine Dämpfung der Oberwellenschwingungen, so dass im Wesentlichen nur die sinusförmige Grundschwingung der Rechteckwechselspannung am Ausgang des Tiefpassfilters 14 anliegt. Das Tiefpassfilter 14 weist insbesondere eine Grenzfrequenz f_{g} auf, die zwischen dem 0,2-fachen der Generatorfrequenz f_{gen} und der Generatorfrequenz f_{gen} liegt. Durch diese Dimensionierung des Tiefpassfilters 14 wird für den Verwendungszweck ein gutes Dämpfungsverhältnis zwischen der Grundwelle und den Oberwellen erzielt, ohne die Grundwelle unnötig zu dämpfen. Durch diese Festlegung der Grenzfrequenz f_{g} in Verbindung mit der Auswahl des Tiefpassfilters 14 zweiter Ordnung wird eine äußerst zweckmäßige und auf die Anforderungen des Schutzschalters abgestimmte Filterwirkung erzielt.

Der dem Tiefpassfilter 14 nachfolgende Teilbereich III stellt im Wesentlichen eine Verstärkereinheit 16, insbesondere einen invertierenden Verstärker dar, wie er in ähnlicher Ausgestaltung im bereits erwähnten Buch "Halbleiterschaltungstechnik" auf S. 136 beschrieben wird. Die invertierende Verstärkereinheit 16 umfasst einen Operationsverstärker 03, dessen Minus-Eingang über einen Widerstand R8 und einen Kondensator C4 mit dem Ausgang des Operationsverstärkers 02 des Tiefpassfilters 14 verbunden ist. Der Plus-Eingang des Operationsverstärkers 03 ist über einen Widerstand R9 mit Massepotential verbunden. Der Minus-Eingang des Operationsverstärkers 03 ist mit seinem Ausgang über einen regelbaren Widerstand R10, beispielsweise ein Potentiometer gekoppelt. Über den regelbaren Widerstand R10 wird die Verstärkerleistung des Verstärkers 16 eingestellt, da über das Verhältnis der Widerstände R10 und R8 der Verstärkungsfaktor und somit die Amplitude der sinusförmigen Ausgangsspannung an Anschluss klemmen 18a,18b festgelegt wird. Die Anschlussklemme 18a ist mit dem Ausgang des Operationsverstärkers 03 verbunden und Anschlussklemme 18b liegt auf Massepotential. An die beiden Anschlussklemmen 18a,18b wird die Steuerwicklung 4 des Summenstromwandlers 2 angeschlossen.

Als wesentliches Merkmal weist die Verstärkereinheit 16 einen in Serie vor dem Widerstand R8 geschalteten Kondensator C4 auf. Mit dem Kondensator C4 wird der Vorteil erzielt, dass ein beispielsweise durch die Spannungsquelle U hervorgerufener Offset der Wechselspannung, also eine Verschiebung der Wechselspannung gegenüber der Nulllage, unterbunden wird. Ein solcher Offset, bei dem die Mittenspannung der Wechselspannung nicht identisch mit der Nulllage ist, kann zusätzlich auch durch die Operationsverstärker 01 bis 03 hervorgerufen werden. Die Verschiebung der Mittenspannung gegenüber der Nullage kann als ein Gleichspannungsanteil aufgefasst werden, der durch die Anordnung des Kondensators C4 herausgefiltert wird. Am Ausgang des Kondensators C4 liegt also eine symmetrisch um die Nullage ausgerichtete sinusförmige Wechselspannung an. Eine solche symmetrische Wechselspannung ist für den Betrieb einer Steuerwicklung 4 in einem Summenstromwandler 2 von enormer Wichtigkeit. Denn eine Verschiebung der Wechselspannung gegenüber der Nullage kommt einer Gleichstromüberlagerung gleich und bewirkt damit eine Vormagnetisierung des Summenstromwandlers 2. Eine solche Vormagnetisierung führt jedoch zu einer nicht erwünschten Verschiebung des Auslösefehlerstroms.

Für die in der Schaltungsanordnung verwendeten Kondensatoren C1 bis C4 werden bevorzugt Keramikkondensatoren mit niedriger Dielektrizitätskonstante verwendet, mit denen eine sehr gute Amplituden- und Frequenzstabilität über einen weiten Temperaturbereich, beispielsweise über einen Bereich zwischen -25°C und +100°C erreicht wird. Dies führt dazu, dass der Schutzschalter über einen weiten Temperaturbereich beim festgelegten Auslösefehlerstrom auslöst.

Für die Operationsverstärker O1 bis O3 werden bevorzugt sogenannte "CMOS-Verstärker" verwendet, welche mit einer sehr geringen Stromaufnahme auskommen. Dadurch wird die Wärmeentwicklung in der Stromversorgung der Schaltung möglichst gering gehalten.

Die Fehlerstrom-Schutzeinrichtung zeichnet sich durch einen speziell auf die Erfordernisse einer solchen Schutzeinrichtung abgestimmten Frequenzgenerator 10 aus, der an seinen Anschlussklemmen 18a,18b eine Sinus-Wechselspannung für die Steuerwicklung 4 bereitstellt. Der Frequenzgenerator 10 ist äußerst einfach aufgebaut und kombiniert einzelne, aus dem Stand der Technik im Wesentlichen bekannte Schaltungsanordnungen in einer äußerst vorteilhaften Weise miteinander, so dass ein zuverlässiger Betrieb der Schutzeinrichtung gewährleistet ist. Ein wesentlicher Punkt ist in der einfachen Ausgestaltung der Schaltanordnung zu sehen, mit der eine kostengünstige Realisierung ermöglicht wird und zugleich die Anforderungen an einen Frequenzgenerator 10 für eine Schutzeinrichtung in überraschender Weise erfüllt.

Der Frequenzgenerator 10 umfasst in seiner einfachsten Ausführung einen Rechteckgenerator 12 zur Erzeugung einer Rechteck-Wechselspannung und ein dem Rechteckgenerator 12 nachgeschaltetes Tiefpassfilter 14, das im Wesentlichen nur die sinusförmige Grundschwingung durchlässt.

## Patentansprüche

1. Fehlerstrom-Schutzeinrichtung, insbesondere Differenzstromschutzschalter, mit einem Summenstromwandler (2), mit einer um den Summenstromwandler (2) angeordneten Steuerwicklung (4), mit einer an dieser angeschlossenen Auswerteeinheit (6) zur Erfassung eines Fehlerstroms, und mit einem mit der Steuerwicklung (4) verbundenen Frequenzgenerator (10) zur Erzeugung einer Wechselspannung, **dadurch gekennzeichnet, dass** der Frequenzgenerator (10) als Sinusgenerator ausgestaltet ist, welcher einen Wechselspannungs-Rechteckgenerator (12) und ein an den Rechteckgenerator angeschlossenes Durchlassfilter (14) aufweist, das auf die sinusförmige Grundschwingung der Rechteckwechselspannung abgestimmt ist.

2. Schutzeinrichtung nach Anspruch 1, **dadurch gekennzeichnet, dass** das Durchlassfilter (14) als aktives Filter, insbesondere als aktives Tiefpassfilter (14), ausgestaltet ist.

3. Schutzeinrichtung nach Anspruch 2, **dadurch gekennzeichnet, dass** das Tiefpassfilter (14) als Filter zweiter Ordnung ausgeführt ist.

4. Schutzeinrichtung nach Anspruch 2 oder 3, **dadurch gekennzeichnet, dass** das Tiefpassfilter (14) die Bedingung 0,2 f_{gen} ≤ f_{g} ≤ 1 f_{gen} erfüllt, wobei f_{gen} die Generatorfrequenz des Rechteckgenerators (12) und f_{g} die Grenzfrequenz des Tiefpassfilters (14) ist.

5. Schutzeinrichtung nach einem der vorhergehenden Ansprüche, **dadurch gekennzeichnet, dass** an das Durchlassfilter (14) eine Verstärkereinheit (16) mit einem Operationsverstärker (03) angeschlossen ist.

6. Schutzeinrichtung nach Anspruch 5, **dadurch gekennzeichnet, dass** die Verstärkereinheit (16) einen Kondensator (4) zur symmetrischen Aussteuerung der am Ausgang des Durchlassfilters (14) anliegenden Sinusspannung um die Nullage umfasst, wobei der Kondensator (4) insbesondere am Eingang der Verstärkereinheit (16) angeordnet ist.

7. Schutzeinrichtung nach einem der vorhergehenden Ansprüche, **dadurch gekennzeichnet, dass** der Rechteckgenerator (12) einen als Komparator ausgeführten Operationsverstärker (01) aufweist.

8. Schutzeinrichtung nach einem der vorhergehenden Ansprüche, **dadurch gekennzeichnet, dass** der Frequenzgenerator (10) für eine weitgehende Temperaturunabhängigkeit Keramikkondensatoren aufweist.

9. Schutzeinrichtung nach einem der vorhergehenden Ansprüche, **dadurch gekennzeichnet, dass** die für den Frequenzgenerator (10) verwendeten Operationsverstärker (01,02,03) als CMOS-Verstärker ausgebildet sind.

## Claims

1. Fault current protective device, in particular a differential current circuit breaker, having a core balance current transformer (2), having a control winding (4) arranged around the core balance current transformer (2), having an evaluation unit (6) connected to the control winding (4) for detecting a fault current, and having a frequency generator (10) connected to the control winding (4) in order to produce an AC voltage, **characterised in that** the frequency generator (10) is in the form of a sine-wave generator which has an AC voltage square wave generator (12) and a filter (14) which is connected to the square wave generator and is tuned to the sinusoidal fundamental of the square wave AC voltage.

2. Protective device according to Claim 1, **characterised in that** the filter (14) is in the form of an active filter, in particular an active low-pass filter (14).

3. Protective device according to Claim 2, **characterised in that** the low-pass filter (14) is in the form of a second-order filter.

4. Protective device according to Claim 2 or 3, **characterised in that** the low-pass filter (14) satisfies the condition 0.2 f_{gen} ≤ f_{g} ≤ 1 f_{gen}, where f_{gen} is the generator frequency of the square wave generator (12) and f_{g} is the cut-off frequency of the low-pass filter (14).

5. Protective device according to one of the preceding claims, **characterised in that** an amplifier unit (16) having an operational amplifier (03) is connected to the filter (14).

6. Protective device according to Claim 5, **characterised in that** the amplifier unit (16) has a capacitor (4) for symmetrically driving the sinusoidal voltage, which is produced at the output of the filter (14), about the zero position, with the capacitor (4) being arranged in particular at the input of the amplifier unit (16).

7. Protective device according to one of the preceding claims, **characterised in that** the square wave generator (12) has an operational amplifier (O1) in the form of a comparator.

8. Protective device according to one of the preceding claims, **characterised in that** the frequency generator (10) has ceramic capacitors, in order to ensure that it is largely independent of temperature.

9. Protective device according to one of the preceding claims, **characterised in that** the operational amplifiers (O1, O2, O3) which are used for the frequency generator (10) are in the form of a CMOS amplifier.

## Revendications

1. Dispositif de protection contre courant de fuite, notamment disjoncteur de protection à courant différentiel, comportant un transformateur de courant cumulé (2), un enroulement de commande (4) agencé autour du transformateur de courant cumulé (2), une unité d'évaluation (6) raccordée à cet enroulement de commande et destinée à la détection d'un courant de fuite et un générateur de fréquences (10) relié à l'enroulement de commande (4) et destiné à la production d'une tension alternative, **caractérisé par le fait que** le générateur de fréquences (10) est conçu comme un générateur d'ondes sinusoïdales qui comporte un générateur rectangulaire de tension alternative (12) et un filtre de bande passante (14) qui est raccordé au générateur rectangulaire et qui est réglé sur l'oscillation fondamentale sinusoïdale de la tension alternative rectangulaire.

2. Dispositif de protection selon la revendication 1, **caractérisé par le fait que** le filtre de bande passante (14) est conçu comme un filtre actif, notamment comme un filtre passe-bas actif (14).

3. Dispositif de protection selon la revendication 2, **caractérisé par le fait que** le filtre passe-bas (14) est réalisé comme un filtre de deuxième ordre.

4. Dispositif de protection selon la revendication 2 ou 3, **caractérisé par le fait que** le filtre passe-bas (14) satisfait à la condition 0,2 f_{gen} ≤ f_{g} ≤ 1 f_{gen}, f_{gen} étant la fréquence du générateur rectangulaire (12) et f_{g} étant la fréquence de coupure du filtre passe-bas (14).

5. Dispositif de protection selon l'une des revendications précédentes, **caractérisé par le fait qu'**une unité d'amplification (16) avec un amplificateur opérationnel (03) est raccordée au filtre de bande passante (14).

6. Dispositif de protection selon la revendication 5, **caractérisé par le fait que** l'unité d'amplification (16) comprend un condensateur (C4) pour la commande symétrique de la tension sinusoïdale, présente à la sortie du filtre de bande passante (14), autour du zéro, le condensateur (C4) étant monté notamment à l'entrée de l'unité d'amplification (16).

7. Dispositif de protection selon l'une des revendications précédentes, **caractérisé par le fait que** le générateur rectangulaire (12) comporte un amplificateur opérationnel (O1) réalisé comme un comparateur.

8. Dispositif de protection selon l'une des revendications précédentes, **caractérisé par le fait que** le générateur de fréquences (10) comporte des condensateurs céramiques pour être largement indépendant de la température.

9. Dispositif de protection selon l'une des revendications précédentes, **caractérisé par le fait que** les amplificateurs opérationnels (01, 02, 03) utilisés pour le générateur de fréquences (10) sont conçus comme des amplificateurs CMOS.
